# EUROPÄISCHE PATENTSCHRIFT

(11) **EP 0 946 603 B1**
(45) Veröffentlichungstag und Bekanntmachung des Hinweises auf die Patenterteilung: **31.10.2001**
(21) Anmeldenummer: 97953836.0
(22) Anmeldetag: 16.12.1997
(51) Int. Cl.: C08F 8/00

(54) **VERFAHREN ZUM HERSTELLEN VON DURCH STRAHLUNG VERNETZBAREN POLYMEREN ACRYL- ODER METHACRYLSÄUREESTERN**
METHOD FOR PRODUCING POLYMERS CROSS-LINKABLE BY RADIATION, ACRYLIC- OR METHACRYLIC ACID ESTERS
PROCEDE DE PRODUCTION DE POLYMERES RETICULABLES PAR RAYONNEMENT, A BASE D'ESTERS D'ACIDE ACRYLIQUE OU METHACRYLIQUE

(30) Priorität: 20.12.1996 DE 19653631
(43) Veröffentlichungstag der Anmeldung: 06.10.1999
(73) Patentinhaber: BASF Coatings Aktiengesellschaft, 48165 Münster (DE)
(72) Erfinder: BLUM, Rainer, D-67069 Ludwigshafen (DE); KELLER, Peter, D-66583 Spiesen-Elversberg (DE)
(74) Vertreter: Isenbruck, Günter, Dr.
(86) Internationale Anmeldenummer: EP9707074
(87) Internationale Veröffentlichungsnummer: WO9828345

(56) Entgegenhaltungen:
- EP-A- 0 206 544
- EP-A- 0 395 990
- EP-A- 0 650 979
- WO-A-90/03991
- DE-A- 2 336 517
- DE-A- 4 433 290
- FR-A- 2 009 112
- G. EISELE: "M CANISME DE PHOTOR TICULATION DE POLYM RES CONTENANT LE MOTIF DICYCLOPENTADI NE EN PR SENCE ET EN ABSENCE DE BENZOPH NONE" MACROMOL. CHEM. PHYS., Nr. 197, Mai 1996, Seiten 1731-1756, XP000630364

## Beschreibung

Die Erfindung betrifft ein Verfahren zum Herstellen von strahlungsvernetzbaren Polymeren auf Basis von polymeren Acryl- oder Methacrylsäureestern, im Folgenden meist kurz als (Meth)acrylsäureester bezeichnet. Polymere der genannten Art sind bekannt und werden zur Herstellung von strahlungshärtbaren Beschichtungen, Lacken, Kleb- oder Imprägnierungsmitteln eingesetzt.

Diese Polymeren sind Copolymere, die Einheiten aus (Meth)acrylsäureestern, insbesondere -alkylestern, gegebenenfalls (Meth)acrylsäure und Einheiten mit polymerisierbaren bzw. vernetzbaren Gruppen enthalten. Die Polymerisation oder Vernetzung erfolgt entweder thermisch, d.h. bei erhöhter Temperatur, oder - bevorzugt - durch Bestrahlung mit aktinischer, besonders ultravioletter Strahlung. Für die Strahlungsvernetzung ist die Anwesenheit von strahlungsaktivierbaren, insbesondere radikalbildenden Initiatoren erforderlich. Derartige Verbindungen sind häufig mit den Polymeren schlecht verträglich und neigen zur Entmischung. Die Beschichtung der zu behandelnden Unterlage erfolgt deshalb zumeist aus einer Lösung in einem gemeinsamen Lösemittel.

Wegen der dabei entstehenden umweltbelastenden Lösemitteldämpfe ist man neuerdings bestrebt, lösemittelfreie Beschichtungsmassen einzusetzen, die entweder flüssig sind und niedermolekulare polymerisierbare Bestandteile enthalten oder die aus der Schmelze oder als Pulverlack aufgebracht werden können. Massen, die flüssige Monomere enthalten, weisen einen unangenehmen Geruch auf, erzeugen häufig Allergien und sind nur begrenzt lagerfähig. Zur Herstellung von Massen, die im wesentlichen aus festen Bestandteilen bestehen, ist es aus den vorstehend genannten Gründen erforderlich, Photoinitiatoreinheiten in die reaktiven Polymeren einzubauen.

In der EP-A 458 164 werden durch Strahlung vernetzbare Polymere beschrieben, die Einheiten mit seitenständigen Phenonresten, insbesondere Benzophenonresten, einpolymerisiert enthalten.

In der EP-A 395 990 werden durch ultraviolette Strahlung vernetzbare Copolymere beschrieben, die Einheiten von zur Wasserstoffabstraktion befähigten Verbindungen und photoreaktive Einheiten enthalten.

Die Herstellung dieser bekannten Polymerisate und die Einführung der reaktiven Reste erfolgt in jedem Fall durch Polymerisation eines Gemischs der Ausgangsstoffe. Für die Herstellung der individuellen Endprodukte ist es daher stets erforderlich, die mit den funktionellen Gruppen, insbesondere den photoreaktiven Gruppen, substituierten Monomeren, im allgemeinen (Meth)acrylester, herzustellen und in der für eine Polymerisation erforderlichen Reinheit zu isolieren. Dieses Verfahren erfordert bis zur Endstufe die Handhabung von aggressiven Monomeren und ist wegen zusätzlicher Reinigungsschritte aufwendig.

Die DE-A 44 33 290 betrifft durch Strahlung vernetzbare polymere Acryl- oder Methacrylsäureester, bei denen ein Acryl- oder ein Methacrylsäureester-Copolymer, das Einheiten von 2-Ethylhexylacrylat sowie Einheiten einer Vinylcarbonsäure enthält, mit einer Verbindung umgesetzt worden ist, die eine Gruppe enthält, die mit zumindest einem Teil der Carboxylgruppen des Copolymeren zu reagieren vermag und die außerdem eine Gruppe enthält, die unter Einwirkung von UV-Strahlung Radikale bilden kann, wie eine Aceto- oder Benzophenon-, Fluorenon- oder Anthrachinongruppe.

In der FR- A 2 009 112 sind photoempfindliche Polymere beschrieben, bei denen ein Acryl- oder Methacrylsäure-Copolymeres, das Einheiten mit einer seitenständigen, reaktionsfähigen Gruppe wie eine Carbonsäureanhydridgruppe enthält, mit einer Verbindung umgesetzt worden ist, die eine Allylgruppe und als weiteres eine Gruppe enthält, die mit der seitenständigen Carbonsäureanhydridgruppe zu reagieren vermag, wie Zimtsäurederivate. Die Zimtsäureverbindungen enthalten photoreaktive vernetzbare Gruppen, die unter Einwirkung von UV-Strahlung Radikale bilden und vernetzen.

Aufgabe der Erfindung war es, ein Verfahren zum Herstellen von durch Strahlung vernetzbaren polymeren (Meth)acrylsäureestem mit unterschiedlichen reaktiven, insbesondere photoaktiven und gegebenenfalls weiteren, vernetzungsfähigen Substituenten vorzuschlagen, bei dem man für individuelle Produkte von einem gemeinsamen, nicht aggressiven, gegebenenfalls auch großtechnisch zugänglichen Produkt ausgehen und durch Umsetzen mit einfach zugänglichen Reaktionspartnern eine Vielzahl von verschiedenen gewünschten Endprodukten erhalten kann.

Erfindungsgemäß wird ein Verfahren zum Herstellen von durch Strahlung vernetzbaren polymeren (Meth)acrylsäureestem vorgeschlagen, das darin besteht, daß man ein Acryl- oder Methacrylsäureester-Copolymeres, das Einheiten mit seitenständigen Dihydrodicyclopentadienresten und Einheiten mit einer seitenständigen reaktionsfähigen Gruppe enthält, mit einer Verbindung umsetzt, die eine Gruppe enthält, die mit der seitenständigen reaktionsfähigen Gruppe zu reagieren vermag, und ferner eine Gruppe, die befähigt ist, unter Einwirkung von aktinischer Strahlung Radikale zu bilden.

Als "strahlungsvernetzbar" soll im Rahmen dieser Beschreibung eine Schicht oder Mischung verstanden werden, die durch aktinische, also chemisch wirksame Strahlung in ihren Eigenschaften, insbesondere in ihrer Löslichkeit, bleibend verändert wird. Als solche Strahlung wird bevorzugt kurzwelliges sichtbares oder langwelliges ultraviolettes Licht eingesetzt. Naturgemäß ist auch jede Strahlung höherer Energie, wie kurzwelliges UV-Licht, Elektronen-Röntgen- oder γ-Strahlung, oder - bei geeigneter Sensibilisierung - auch längerwelliges Licht geeignet. Laserstrahlung kann ebenfalls eingesetzt werden.

Als (Meth)acrylsäureester-Copolymere werden bevorzugt solche Vertreter eingesetzt, die neben (Meth)acrylsäureestereinheiten noch Einheiten mit Wasserstoffatomen enthalten, die durch Einwirkung von Radikalen abspaltbar sind. Als diese Einheiten kommen insbesondere solche in Betracht, die tertiäre oder in α-Stellung zu einer Doppelbindung stehende Wasserstoffatome aufweisen. Auch Einheiten aus anderen copolymerisierbaren Monomeren, z.B. Malein- oder Fumarsäureverbindungen, können in den Copolymeren enthalten sein.

Als seitenständige reaktionsfähige Gruppen sind in den eingesetzten (Meth)acrylsäureester-Copolymeren insbesondere Isocyanat-, Hydroxy-, Carboxy-, Carbonsäureanhydrid-, Amino- oder Oxirangruppen enthalten. Diese Gruppen wurden im allgemeinen durch Copolymerisation mit entsprechenden Monomeren, z.B. mit Hydroxyalkyl(meth)acrylaten, (Meth)acrylsäure, Aminoalkyl(meth)acrylaten, Isocyanatoalkyl(meth)acrylaten oder Glycidyl(meth)acrylat eingeführt.

Die im allgemeinen niedermolekularen Reaktionspartner der Copolymeren weisen als Gruppen, die mit deren seitenständigen reaktiven Gruppen zu reagieren vermögen, vorzugsweise Hydroxy-, Carboxy-, Carbonsäureanhydrid-, Isocyanat- oder Aminogruppen auf. Beispiele für solche niedermolekulare Reaktionspartner sind Hydroxy-, Hydroxyalkyl- oder Hydroxyalkoxybenzophenone, -anthrachinone oder -thioxanthone. Diese Verbindungen werden bevorzugt mit Oxirangruppen, Isocyanatgruppen, Carbonsäure- oder Carbonsäureanhydridgruppen im Polymeren umgesetzt.

Grundsätzlich ist für die hier vorzunehmende polymeranaloge Einführung von Resten mit Gruppen, die durch Strahlung zur Radikalbildung veranlaßt werden können, jede Kombination von seitenständigen reaktionsfähigen Gruppen im Polymeren mit entsprechenden, als Reaktionspartner geeigneten Gruppen in der niedermolekularen Reaktionskomponente geeignet. Derartige zur Reaktion miteinander befähigte Gruppen sollen lediglich so beschaffen sein, daß sie die Herstellung der Komponenten, z.B. die Polymerisation der entsprechenden Monomeren zum reaktionsfähigen Polymeren, nicht stören und unter den Bedingungen der Verarbeitung nicht mit sich selbst reagieren. Geeignete Kombinationen von reaktionsfähigen Gruppen sind bekannt und bei der Modifizierung von Polymeren durch polymeranaloge Reaktionen gebräuchlich.

Als Gruppen, die befähigt sind, unter aktinischer Bestrahlung Radikale zu bilden, sind bevorzugt die Reste von aromatischen Ketonen oder von Chinonen, z.B. von Xanthon, Thioxanthon, 9,10-Anthrachinon, Benzil, Acetophenon, Benzophenon und substituierten Benzophenonen, in Betracht zu ziehen. Besonders bevorzugt werden als Grundkörper Phenone der allgemeinen Formel

R₁ - CO - Ph(-R₂)ₙ

worin
- Ph: eine Phenylengruppe mit n-1 zusätzlichen freien Valenzen,
- R₁: einen Alkyl- oder Arylrest oder einen Rest R₂,
- R₂: OH, R₃OH, N(R₃)₂, NHR₄, NHR₃OH, COOH, COOR₃OH, R₃NCO oder NCO, wobei R₃ eine Alkyl-bzw. Alkylengruppe mit 1 bis 6 Kohlenstoffatomen, R₄ eine Alkylgruppe mit 1 bis 6 Kohlenstoffatomen oder eine Cycloalkylgruppe ist, und
- n: eine Zahl von 1 bis 3 bedeutet
und wobei zwei oder mehrere Reste R₂ untereinander gleich oder verschieden sein können.

Die Alkyl- oder Alkylengruppen R₁ oder R₂ haben im allgemeinen 1 bis 6, bevorzugt 1 bis 3, Alkylengruppen im allgemeinen mindestens 2 Kohlenstoffatome.

Durch die beschriebene polymeranaloge Umsetzung werden modifizierte Polymere mit seitenständigen Gruppen erhalten, die durch aktinische Strahlung Radikale bilden. Bevorzugt enthalten die modifizierten, strahlungsempfindlichen Polymeren außerdem Gruppen, die unter Einwirkung von Radikalen abstrahierbare bzw. abspaltbare Wasserstoffatome aufweisen, insbesondere tertiäre oder in α-Stellung zu einer Doppelbindung stehende Wasserstoffatome. Sie können auch andere seitenständige vernetzbare Gruppen, z.B. radikalisch polymerisierbare Doppelbindungen, insbesondere (Meth)acryloxygruppen enthalten.

Bevorzugt werden solche Gruppen bei der Copolymerisation eingeführt, z.B. durch Verwendung von Isopropyl(meth)acrylat, Isobutyl(meth)acrylat, Ethylhexyl(meth)acrylat, Phenoxyethyl(meth)acrylat, Tetrahydrofurfuryl(meth)acrylat, Furfuryl(meth)acrylat, Isobornyl(meth)acrylat, Adamantyl(meth)acrylat allein oder in beliebiger Mischung dieser Monomeren, als Comonomere bei der Herstellung der Acryl- oder Methacrylsäureester-Copolymeren.

Besonders hohe Strahlungsempfindlichkeit weisen Polyacrylate auf, wenn sie Dihydrodicyclopentadienylgruppen eingebaut enthalten. Der Einbau solcher Gruppen in die Polyacrylate erfolgt z.B. durch die Mitverwendung von Dihydrodicyclopentadienylacrylat, Dihydrodicyclopentadienylmethacrylat, Dihydrodicyclopentadienylethacrylat, Dihydrodicyclopentadienylcinnamat, Dihydrodicyclopentadienylmonomaleinat, Dihydrodicyclopentadienylbismaleinat, Dihydrodicyclopentadienylmonofumarat und Dihydrodicyclopentadienylbisfumarat allein oder in beliebiger Mischung dieser Monomeren, als Monomere bei der Herstellung der erfindungsgemäß als Ausgangsstoffe dienenden Polyacrylate.

Die Auswahl der zu kombinierenden Monomeren erfolgt nach Prinzipien, die dem Fachmann bekannt sind, so daß sie den Ansprüchen der vorgesehenen Verwendung genügen. Diese Anforderungen können recht unterschiedlich sein, so werden z.B. für klare Decklacke von Metallic-Lackierungen bei Automobilen höchste Vergilbungs- und Witterungsbeständigkeit, Kratzfestigkeit und Glanzhaltung bei hoher Härte gefordert. Bei einem coil-coat-Lack, d.h. einem Lack, mit dem Blechbahnen lackiert, dann aufgewickelt und später unter Verformung weiterverarbeitet werden, kommt es auf höchste Elastizität und Haftung an.

Auch der Preis der Monomeren. kann ein Auswahlkriterium sein, wenn für bestimmte Anwendungen keine hohe Qualität der Lackierungen, dafür aber ein niedriger Preis gefordert ist.

Es ist bekannt, daß z.B. Styrol und Methylmethacrylat "harte" Monomere sind, d.h. Monomere, die Homopolymerisate mit hohem Tg-Wert bilden und die die Glasübergangstemperatur und den Erweichungspunkt der sie enthaltenden Copolymeren und die Härte der entsprechenden Lackierungen erhöhen, während z.B. Butylacrylat, Ethylhexylacrylat und Tridecylacrylat als "weiche" Monomere diese Eigenschaften erniedrigen, dafür aber die Elastizität verbessern. Weiter ist auch bekannt, daß kleinere Anteile an (Meth)acrylsäure oder (Meth)acrylamid die Haftung verbessern.

Diese Grundprinzipien bei der Auswahl und Mischung von Monomeren zur Einstellung von Basiseigenschaften bei Lacken sind dem Polymerchemiker und Lackfachmann bekannt.

Weitere Bestandteile der erfindungsgemäß bei der polymeranalogen Umsetzung eingesetzten Acrylatcopolymeren können darauf zielen, anstelle oder neben der Vernetzung durch Wasserstoffabstraktion eine UV-Vernetzung bzw. -polymerisation von Doppelbindungen als Härtungsreaktion zu bewirken. Die dazu notwendigen Doppelbindungen können z.B. dadurch in die Polymeren eingeführt werden, daß einpolymerisierte (Meth)acrylsäure mit Glycidylmethacrylat oder einpolymerisiertes Glycidylmethacrylat mit (Meth)acrylsäure umgesetzt wird, oder bevorzugt einpolymerisierte Hydroxyalkyl(meth)acrylate mit Acrylsäureanhydrid oder Methacrylsäureanhydrid umgesetzt werden.

Die Copolymerisate können auch neben den polymergebundenen, zur H-Abstraktion befähigten UV-Photoinitiatoren zusätzlich mit weiteren üblichen UV-Photoinitiatoren sowie gegebenenfalls üblichen Stabilisatoren gegen UV-Strahlung vermischt sein.

Weiter können auch Bestandteile in den Copolymeren enthalten sein, die darauf gerichtet sind, neben der Vernetzung durch UV-Licht eine zusätzliche thermische Vernetzung zu ermöglichen. Dazu geeignet sind z.B. Glycidylmethacrylat, das mit Fremdvernetzern wie polyfunktionellen Carbonsäuren oder Carbonsäureanhydriden reagieren kann, oder freie Carboxylgruppen aus einpolymerisierter (Meth)acrylsäure, die mit Epoxidharzen vernetzt werden können. Auch die thermische Vernetzung über einpolymerisierte Methylolierungsprodukte und Methylolether von (Meth)acrylamid sind zur Covernetzung geeignet. Ziel ist es, sich gegenseitig durchdringende Netzwerke zu erzeugen, die z.B. verbesserte Lackeigenschaften aufweisen. Weiter können den UV-vernetzbaren Copolymeren auch Doppelbindungen enthaltende Harze zugemischt werden, um so eine Co-Vernetzung über Doppelbindungen zu erreichen. Solche Harze können aus Polymeren, die Glycidylmethacrylat enthalten, durch Umsetzen mit Acrylsäure erhalten werden. Entsprechende Polymere sind in der US-A 4064161 oder der DE-A 2436186 beschrieben.

Die Herstellung der für die erfindungsgemäße Umsetzung dienenden Acrylatcopolymeren kann auf bekannte Weise durch radikalische Polymerisation in Lösung oder in Substanz erfolgen, wobei zur Steuerung des Molekulargewichts der Polymeren auch Regler zugegeben werden können.

Eine bevorzugte Ausführungsform besteht auch darin, daß die Copolymeren mit oder ohne radikalliefernde Polymerisationsinitiatoren durch Polymerisation bei erhöhter Temperatur und unter Druck in der Masse oder in Gegenwart von Lösemitteln hergestellt werden. Gut geeignet ist vor allem die Massepolymerisation bei hoher Temperatur im kontinuierlichen Betrieb.

Die erfindungsgemäß erhaltenen UV-vernetzbaren Polymeren können durch elektrostatisches Versprühen, Spritzen, Tauchen, Walzen, Rakeln oder nach einer anderen Methode aus Lösung oder Substanz appliziert und durch UV-Strahlung vernetzt werden. Weiter kann die Bestrahlung auch bei gleichzeitiger Erwärmung der Stoffe durchgeführt werden oder die Stoffe können vor oder nach der Bestrahlung zusätzlich erwärmt werden.

Die Strahlenvernetzung wird bevorzugt unter UV-Licht durchgeführt, wobei es möglich ist, durch die Auswahl der erfindungsgemäß eingeführten copolymer gebundenen oder der zugesetzten Photoinitiatoren die UV-Absorption der Stoffe auf das Energiespektrum der UV-Lampen abzustimmen.

Weiterhin können die fertigen strahlungsvernetzbaren Gemische übliche Hilfsmittel erhalten, z.B. Katalysatoren für eine Covernetzung, Verlaufsverbesserer, Antikratermittel, Haftungsverbesserer, Farbstoffe, Pigmente u.a.

Die in den folgenden Beispielen angegebenen Mengen bzw. Teile (T) und Prozente sind, soweit nicht anders angegeben, Gewichtsmengen und Gewichtsprozente.

### Beispiel 1

In einem Glaskolben mit Rührer, Rückflußkühler, zwei Tropftrichtern und einem Thermometer werden unter leichter Stickstoffspülung vorgelegt

| | | |
|---|---|---|
| 243 | T | Isopropanol und |
| 243 | T | Toluol. |

Bei 80°C werden über einen Tropftrichter in 2 Stunden

| | | |
|---|---|---|
| 90 | T | Isopropanol, |
| 90 | T | Toluol und |
| 30 | T | 2,2'-Azobis-(2-methyl-butyronitril) |

und gleichzeitig über den anderen Tropftrichter in 1,5 Stunden

| | | |
|---|---|---|
| 300 | T | Dihydrodicyclopentadienylacrylat (handelsübliches Produkt), |
| 300 | T | Methylmethacrylat, |
| 120 | T | Glycidylmethacrylat, |
| 280 | T | Butylacrylat und |
| 110 | T | 2-Mercapto-ethanol |

zugesetzt. Es wird 2 Stunden bei ca. 80°C nachpolymerisiert, dann werden

| | | |
|---|---|---|
| 166 | T | 4-Hydroxy-benzophenon und |
| 1 | T | 4-Dimethylamino-pyridin |

zugegeben, der Kühler wird auf Destillierstellung umgebaut und das Gemisch unter gleichzeitigem Abdestillieren des Lösemittels auf 130°C aufgeheizt. Es wird bei 130°C 3 Stunden weiter umgesetzt, dann wird unter Vakuum das Restlösemittel abdestilliert und das Polymere als Schmelze auf Aluminiumfolie ausgegossen. Das Polymere erstarrt zu einem spröden Harz. Das Harz wird zu einem Pulver mit einer durchschnittlichen Korngröße von ca. 40*µ*m vermahlen und elektrostatisch auf gereinige Stahlbleche appliziert. Die Bleche werden auf einer Heizplatte von 140°C 10 Minuten erwärmt bis das Pulver geschmolzen ist, dann wird die Schmelze mit einer Quecksilbermitteldrucklampe mit einer Hauptemission bei 365 nm und einer Energiedichte von 15 mW/cm² 3 Minuten bestrahlt. Nach dem Abkühlen resultiert ein harter, lösemittelbeständiger, glänzender Lacküberzug.

### Beispiel 2

In einem Glaskolben mit Rührer, Rückflußkühler, zwei Tropftrichtem und einem Thermometer werden unter leichter Stickstoffspülung vorgelegt

| | | |
|---|---|---|
| 243 | T | Isopropanol und |
| 243 | T | Toluol. |

Bei 80°C werden über einen Tropftrichter in 2 Stunden

| | | |
|---|---|---|
| 90 | T | Isopropanol, |
| 90 | T | Toluol und |
| 30 | T | 2,2'-Azobis-(2-methyl-butyronitril) |

und gleichzeitig über den anderen Tropftrichter in 1,5 Stunden

| | | |
|---|---|---|
| 300 | T | Methylmethacrylat, |
| 400 | T | Glycidylmethacrylat, |
| 300 | T | Butylacrylat und |
| 10 | T | 2-Mercapto-ethanol |

zugesetzt.

Es wird 2 Stunden bei ca. 80°C nachpolymerisiert, dann werden

| | | |
|---|---|---|
| 139 | T | 4-Hydroxy-benzophenon und |
| 1 | T | 4-Dimethylamino-pyridin |

zugegeben, der Kühler wird auf Destillierstellung umgebaut und das Gemisch unter gleichzeitigem Abdestillieren des Lösemittels auf 130°C aufgeheizt. Es wird bei 130°C 3 Stunden weiter umgesetzt, dann wird unter Vakuum das Restlösemittel abdestilliert, der Kühler auf Rückfluß zurückgesetzt und die Heizung entfernt. Die abkühlende Schmelze wird in

| | | |
|---|---|---|
| 520 | T | Butylacetat |

gelöst, dann werden zugegeben

| | | |
|---|---|---|
| 1.50 | T | Acrylsäure, |
| 1 | T | 4-Dimethylamino-pyridin und |
| 2 | T | Hydrochinonmonomethylether. |

Es wird 9 Stunden bei 95 bis 100°C gerührt, dabei sinkt die Säurezahl auf 5,8. Die resultierende Harzlösung wird mit einer Rakel zu einer Schichtdicke (gemessen nach der Härtung) von ca. 30*µ*m auf gereinigtes Stahlblech appliziert. Das Stahlblech wird dann 20 Minuten auf eine Heizplatte von 120°C gelegt. Danach ist das Lösemittel weitgehend verdunstet und der Film fast klebfrei, aber noch nicht lösemittelfest. Der Film wird dann auf der Heizplatte mit der gleichen Lampe wie bei Beispiel 1 eine Minute bestrahlt. Nach dem Abkühlen resultiert ein harter, lösemittelbeständiger, glänzender Lacküberzug.

### Beispiel 3

In einem Glaskolben mit Rührer, Rückflußkühler, zwei Tropftrichtern und einem Thermometer werden unter leichter Stickstoffspülung vorgelegt

| | | |
|---|---|---|
| 243 | T | Isopropanol und |
| 243 | T | Toluol. |

Bei 80°C werden über einen Tropftrichter in 2 Stunden

| | | |
|---|---|---|
| 90 | T | Isopropanol, |
| 90 | T | Toluol und |
| 30 | T | 2,2'-Azobis-(2-methyl-butyronitril) |

und gleichzeitig über den anderen Tropftrichter in 1,5 Stunden

| | | |
|---|---|---|
| 100 | T | Dihydrodicyclopentadienylacrylat, |
| 200 | T | Methylmethacrylat, |
| 400 | T | Glycidylmethacrylat, |
| 300 | T | Butylacrylat und |
| 10 | T | 2-Mercapto-ethanol |

zugesetzt.

Es wird 2 Stunden bei ca. 80°C nachpolymerisiert, dann werden

| | | |
|---|---|---|
| 139 | T | 4-Hydroxy-benzophenon und |
| 1 | T | 4-Dimethylamino-pyridin |

zugegeben, der Kühler wird auf Destillierstellung umgebaut und das Gemisch unter gleichzeitigem Abdestillieren des Lösemittels auf 130°C aufgeheizt. Es wird bei 130°C 3 Stunden weiter umgesetzt, dann wird unter Vakuum das Restlösemittel abdestilliert, der Kühler auf Rückfluß zurückgesetzt und die Heizung entfernt. Die abkühlende Schmelze wird in

| | | |
|---|---|---|
| 520 | T | Butylacetat |

gelöst, dann werden zugegeben

| | | |
|---|---|---|
| 150 | T | Acrylsäure, |
| 1 | T | 4-Dimethylamino-pyridin und |
| 2 | T | Hydrochinonmonomethylether. |

Es wird 9 Stunden bei 95 bis 100°C gerührt, dabei sinkt die Säurezahl auf 5,8. Die resultierende Harzlösung wird mit einer Rakel zu einer Schichtdicke (gemessen nach der Härtung) von ca. 30*µ*m auf gereinigtes Stahlblech appliziert. Das Stahlblech wird dann 20 Minuten auf eine Heizplatte von 120°C gelegt. Danach ist das Lösemittel weitgehend verdunstet und der Film fast klebfrei, aber noch nicht lösemittelfest. Der Film wird dann auf der Heizplatte mit der gleichen Lampe wie bei Beispiel 1 eine Minute bestrahlt. Nach dem Abkühlen resultiert ein harter, lösemittelbeständiger, glänzender Lacküberzug.

## Patentansprüche

1. Verfahren zum Herstellen von durch Strahlung vernetzbaren polymeren Acryl- oder Methacrylsäureestern, **dadurch gekennzeichnet, daß** man ein Acryl- oder Methacrylsäureester-Copolymeres, das Einheiten mit seitenständigen Dihydrodicyclopentadienresten und Einheiten mit einer seitenständigen reaktionsfähigen Gruppe enthält, mit einer Verbindung umsetzt, die eine Gruppe enthält, die mit der seitenständigen reaktionsfähigen Gruppe zu reagieren vermag, und ferner eine Gruppe, die befähigt ist, unter Einwirkung von aktinischer Strahlung Radikale zu bilden.

2. Verfahren nach Anspruch 1, **dadurch gekennzeichnet, daß** das Acryl- oder Methacrylsäureester-Copolymere zusätzlich Einheiten mit seitenständigen radikalisch polymerisierbaren oder vernetzbaren Doppelbindungen enthält.

3. Verfahren nach Anspruch 1, **dadurch gekennzeichnet, daß** die seitenständige reaktionsfähige Gruppe eine Isocyanat-, Hydroxy-, Carboxy-, Carbonsäureanhydrid-, Amino- oder Oxirangruppe ist.

4. Verfahren nach Anspruch-1, **dadurch gekennzeichnet, daß** die Gruppe, die zur Bildung von Radikalen befähigt ist, von einem aromatischen Keton oder Chinon abgeleitet ist.

5. Verfahren nach Anspruch 4, **dadurch gekennzeichnet, daß** das aromatische Keton oder Chinon Xanthon, Thioxanthon, Anthrachinon, Benzil, Acetophenon oder Benzophenon ist.

## Claims

1. A process for preparing radiation-crosslinkable polymeric acrylates and methacrylates, which comprises reacting an acrylate or methacrylate copolymer containing units having dihydrodicyclopentadiene side radicals and units having a reactive side group with a compound that contains a group which is capable of reacting with the reactive side group and also a group which is capable of forming free radicals under the action of actinic radiation.

2. A process as claimed in claim 1, wherein the acrylate or methacrylate copolymer additionally contains units having free-radically polymerizable or crosslinkable double bonds at the side.

3. A process as claimed in claim 1, wherein the reactive side group is an isocyanate, hydroxyl, carboxyl, carboxylic anhydride, amino or oxirane group.

4. A process as claimed in claim 1, wherein the group capable of forming free radicals is derived from an aromatic ketone or quinone.

5. A process as claimed in claim 4, wherein the aromatic ketone or quinone is xanthone, thioxanthone, anthraquinone, benzil, acetophenone or benzophenone.

## Revendications

1. Procédé pour la préparation d'esters d'acide acrylique ou méthacrylique polymères, réticulables par rayonnement, **caractérisé par le fait qu'**on fait réagir un copolymère d'ester d'acide acrylique ou méthacrylique qui contient des unités avec des restes dihydrodicyclopentadiène latéraux et des unités avec un groupe réactif latéral, avec un composé qui contient un groupe pouvant réagir avec le groupe réactif latéral et en outre un groupe qui est apte à former des radicaux sous l'action d'un rayonnement actinique.

2. Procédé selon la revendication 1, **caractérisé par le fait que** le copolymère d'ester d'acide acrylique ou méthacrylique contient en outre des unités ayant des doubles liaisons latérales, polymérisables ou réticulables par voie radicalaire.

3. Procédé selon la revendication 1, **caractérisé par le fait que** le groupe réactif latéral est un groupe isocyanate, hydroxy, carboxy, anhydride d'acide carboxylique, amino ou oxiranne.

4. Procédé selon la revendication 1, **caractérisé par le fait que** le groupe qui est apte à former des radicaux est dérivé d'une cétone aromatique ou d'une quinone.

5. Procédé selon la revendication 4, **caractérisé par le fait que** la cétone aromatique ou la quinone est la xanthone, la thioxanthone, l'anthraquinone, le benzile, l'acétophénone ou la benzophénone.
